# EUROPÄISCHE PATENTSCHRIFT

(11) **EP 0 562 084 B1**
(45) Veröffentlichungstag und Bekanntmachung des Hinweises auf die Patenterteilung: **24.01.1996**
(21) Anmeldenummer: 92921489.8
(22) Anmeldetag: 21.10.1992
(51) Int. Cl.: B60S 1/48

(54) **WISCHVORRICHTUNG FÜR SCHEIBEN VON KRAFTFAHRZEUGEN**
VEHICLE-WINDSCREEN WIPER
SYSTEME D'ESSUIE-GLACE POUR VEHICULE AUTOMOBILE

(30) Priorität: 23.10.1991 DE 4134980
(43) Veröffentlichungstag der Anmeldung: 29.09.1993
(73) Patentinhaber: ITT Automotive Europe GmbH, D-60488 Frankfurt am Main (DE)
(72) Erfinder: GÖRNER, Eugen, D-7171 Ingersheim 1 (DE); KARL, Helmut, D-7103 Schwaigern (DE); OLDRICH, Krizek, D-7120 Bietigheim-Bissingen (DE)
(86) Internationale Anmeldenummer: EP9202413
(87) Internationale Veröffentlichungsnummer: WO9308047

(56) Entgegenhaltungen:
- DE-A- 2 509 876
- DE-A- 3 907 967
- DE-U- 8 706 029
- US-A- 3 887 956

## Beschreibung

Die Erfindung geht aus von einer Wischvorrichtung für Scheiben von Kraftfahrzeugen, die die Merkmale aus dem Oberbegriff des Anspruchs 1 aufweist (Wischvorrichtung, die z.B. jener nach der DE-A-3 907 968, DE-A-3 907 967 oder DE-A-2 509 876 gattung gemäß ausgebildet ist.

Vor allem bei Nutzfahrzeuger ist es heute gängige Praxis, Waschdüsen direkt am Wischhebel, also am Wischarm oder am Wischblatt vorzusehen, die über eine Flüssigkeitsleitung, die am Arm entlanggeführt ist, mit Waschflüssigkeit versorgt werden. Auch bei Personenkraftwagen werden derartige Konstruktionen in zunehmender Weise benutzt.

Es sind Wischarme bekannt, bei denen das Befestigungsteil von einer Kappe aus Kunststoff abgedeckt wird. Von dieser Kappe wird die Verbindung zwischen dem Wischarm und der Wischerwelle geschützt. Außerdem wird, sofern der Wischarm außerhalb der Karosserie mit der Wischerwelle verbunden ist, das Aussehen verbessert. Viele moderne Kraftfahrzeuge haben zwischen der Windschutzscheibe und der Motorhaube einen Schlitz, in den die Windschutzscheibe hineinreicht und aus dem die Wischarme herausragen. Die Wischerwelle befindet sich unterhalb der Schlitzöffnung, so daß sie vom Karosserieblech bedeckt ist. Eine Abdeckkappe ist dann nicht mehr vorgesehen. Sowohl bei Wischarmen mit Abdeckkappe als auch bei Wischarmen ohne Abdeckkappe kann es notwendig sein, die Flüssigkeitsleitung im Bereich des Befestigungsteils sicher zu halten.

Aus dem DE-U-87 06 029 ist eine Wischvorrichtung bekannt, die einen Wischarm mit einem Befestigungsteil umfaßt, das von einer Kappe abgedeckt ist, die an einer Seitenwand einstückig ein hülsenförmiges Halteelement besitzt, durch das die Flüssigkeitsleitung hindurchgefädelt ist.

Es sind auch schon Wischarme bekannt, bei denen eine Waschflüssigkeitsleitung nicht seitlich außen am Wischarm entlanggeführt ist, sondern innerhalb des U-förmigen Gelenkteils verläuft. Dies wird z. B. in der DE-A-25 09 876 gezeigt. Insbesondere ist die Flüssigkeitsleitung dann sozusagen innerhalb des Wischarms angeordnet, wenn die Wischerwelle durchbohrt ist und die Waschflüssigkeit durch die Wischerwelle nach draußen geleitet wird. Waschflüssigkeitsdurchführungen durch die Wischerwelle sind z. B. aus der DE-A-39 07 967 oder der DE-A-39 07 968 bekannt. Bei dem erwähnten Stand der Technik mit einer Anordnung der Waschflüssigkeitsleitung innerhalb des Wischarms ist jeweils eine komplizierte Verlegung der Waschflüssigkeitsleitung innerhalb des Befestigungsteils notwendig. Insbesondere muß die Waschflüssigkeitsleitung zwischen der Gelenkstelle zwischen Befestigungsteil und Gelenkteil und einem Haltestift, an dem eine Anpreßdruckfeder des Wischarms eingehängt ist, hindurchgefädelt werden.

Der Erfindung liegt die Aufgabe zugrunde, eine Wischvorrichtung für Scheiben an Kraftfahrzeugen, die die Merkmale aus dem Oberbegriff des Anspruchs 1 umfaßt, so auszubilden, daß die Flüssigkeitsleitung im Bereich des Befestigungsteils auf einfache Weise und verdeckt am Wischarm befestigt werden kann.

Diese Aufgabe wird erfindungsgemäß dadurch gelöst, daß bei einer Wischvorrichtung mit den Merkmalen aus dem Oberbegriff des Anspruchs 1 das Befestigungsteil seitlich eine Hohlkehle besitzt, in der die Flüssigkeitsleitung verläuft und die von einer Seitenwange des Gelenkteils oder der Abdeckkappe abgedeckt wird. In diese Hohlkehle kann die Flüssigkeitsleitung auf einfache Weise eingelegt werden. Das Werkzeug zum Formen des Befestigungsteils wird kaum komplizierter, da eine Aufnahme für ein Lager des Gelenks zwischen dem Befestigungsteil und dem Gelenkteil ohnehin in Richtung der Achse des Gelenks entformt werden muß, eine Richtung, die mit der Entformungsrichtung der Hohlkehle übereinstimmt.

Vorteilhafte Ausgestaltungen einer erfindungsgemäßen Wischvorrichtung kann man den Unteransprüchen entnehmen.

Wenn sich die Flüssigkeitsleitung in der Hohlkehle befindet, sollte sie, um ihren inneren Querschnitt nicht zu verkleinern, nicht zusammengedrückt werden. Deshalb ist gemäß Anspruch 2 vorgesehen, daß der Abstand der Seitenwange von der tiefsten Stelle der Hohlkehle wenigstens annähernd dem Außendurchmesser der Flüssigkeitsleitung entspricht.

Es ist denkbar die Hohlkehle senkrecht zur Seitenwange bzw. in Richtung der Achse des Gelenks zwischen Befestigungsteil und Gelenkteil für die Montage der Flüssigkeitsleitung zugänglich zu machen, indem z. B. die Abdeckkappe erst nachträglich montiert wird oder sich während der Montage in einer Abklappstellung befindet. Allerdings muß dann, wenn die Abdeckkappe oder das Gelenkteil in die richtige Position gebracht wird, darauf geachtet werden, daß die Flüssigkeitsleitung in der Hohlkehle verbleibt. Günstiger erscheint es deshalb, wenn gemäß Anspruch 3 die Hohlkehle parallel zur Seitenwange zugänglich ist. Dann kann die Flüssigkeitsleitung durch den Zugang in die Hohlkehle eingedrückt werden, wobei sie im Querschnitt verformt wird, jedoch ihre ursprüngliche Form wieder annimmt, sobald sie sich in der Hohlkehle befindet.

Eine Führung der Flüssigkeitsleitung ist vor allem in solchen Bereichen von Vorteil, in denen der Verlauf der Leitung gekrümmt ist. Deshalb ist gemäß Anspruch 5 vorgesehen, daß sich zumindest im Bereich des Gelenks zwischen dem Befestigungsteil und dem Gelenkteil eine Hohlkehle befindet, und zwar befindet sich die Hohlkehle, von der Seite des Rückens des Gelenkteils oder der Abdeckkappe aus gesehen, zweckmäßigerweise jenseits des Gelenks, da dort ohnehin genug Material des Befestigungsteils vorhanden ist.

Um die Breite des Wischarms trotz des seitlichen Verlaufs der Flüssigkeitsleitung zu begrenzen, ist vorgesehen, daß der Einhängepunkt einer Anpreßdruckfeder am Befestigungsteil, die andererseits noch am Ende einer Wischstange oder am Gelenkteil eingehängt ist, sich näher an der der Hohlkehle abgelegenen Seitenwand des Gelenkteils oder der Abdeckkappe befindet.

Durch den seitlichen Verlauf der Flüssigkeitsleitung und durch die bezüglich der Seitenwangen außermittige Aufhängung der Anpreßdruckfeder am Befestigungsteil wird der gesamte Aufbau des Wischarms etwas asymmetrisch. Bei der Draufsicht auf die Windschutzscheibe eines Kraftfahrzeugs sollte der Wischarm jedoch ein symmetrisches Aussehen haben. Deshalb soll gemäß Anspruch 8 die Wischstange mittig zwischen den beiden Seitenwangen des Gelenkteils verlaufen, wobei sich dann der Einhängepunkt der Anpreßdruckfeder an der Wischstange vorzugsweise mittig zwischen den beiden Seitenwangen des Gelenkteils befindet. Die Mittellinie der Anpreßdruckfeder verläuft dann etwas schräg zu einer Längsmittelebene des Gelenkteils.

Sind die längsverlaufenden Außenwände des Befestigungsteils symmetrisch bezüglich einer ersten Mittelebene und sind das Gelenkteil oder die Abdeckkappe wegen eines gewünschten symmetrischen Aussehens des Wischarms symmetrisch bezüglich einer zweiten Mittelebene ausgebildet, so verläuft die erste Mittelebene, von der Außenwand des Befestigungsteils mit der Hohlkehle aus betrachtet, vorteilhafterweise jenseits der zweiten Mittelebene in einem Abstand zu dieser. Üblicherweise besitzt das Befestigungsteil eines Wischarms eine Nabe mit einer zentralen Bohrung zum Aufsetzen auf die Wischerwelle. Weil die Nabe eine bestimmte Materialstärke haben muß und aus Symmetriegründen ist dann gemäß Anspruch 10 die Achse der Bohrung im Abstand von der ersten Mittelebene auf derselben Seite wie die Hohlkehle angeordnet. Insbesondere verläuft die Achse der Bohrung in der zweiten Mittelebene.

Ein Ausführungsbeispiel einer erfindungsgemäßen Wischvorrichtung ist in der Zeichnung dargestellt. Anhand der Figuren dieser Zeichnungen wird die Erfindung nun näher erläutert, wobei auch weitere vorteilhafte Ausbildungen deutlich werden.

Es zeigen:
- Figur 1: einen Längsschnitt durch einen Wischarm mit einer Waschflüssigkeitsleitung, die im Bereich eines Gelenks zwischen dem Befestigungsteil und dem Gelenkteil des Wischarms in einer Hohlkehle verläuft,
- Figur 2: eine Ansicht des Wischarms aus Figur 1 in Richtung des Pfeiles A,
- Figur 3: eine Ansicht des Wischarms aus Figur 1 in Richtung des Pfeiles B und
- Figur 4: einen Schnitt entlang der Linie IV-IV aus Figur 1.

Der in den Figuren gezeigte Wischarm 10 umfaßt als wesentliche Teile ein Befestigungsteil 11, eine Abdeckkappe 9 für das Befestigungsteil 11, ein Gelenkteil 12, eine Wischstange 13 und eine Anpreßdruckfeder 14. Das Befestigungsteil 11 ist in einem Druckgießverfahren aus Zink oder Aluminium hergestellt und kann mit einer Nabe 15, die einen konischen Durchbruch 16 aufweist, drehfest auf einer Wischerwelle 17 befestigt werden. Das Gelenkteil 12 ist aus einem Blech gefertigt und in eine U-Form mit zwei längsverlaufenden Seitenwangen 18 und einem Rücken 19 gebracht, der die beiden Seitenwangen 18 miteinander verbindet. Das Gelenkteil 12 ist am Befestigungsteil 11 schwenkbar gelagert. Es ist symmetrisch bezüglich einer Längsmittelebene 21 ausgebildet, die senkrecht auf dem Rücken 19 steht. Die Wischstange 13 ragt mit einem Ende 20 in das Gelenkteil 12 hinein und ist am anderen Ende in nicht näher dargestellter Weise zu einem Haken gebogen, um ein Wischblatt am Wischarm befestigen zu können. Im Abstand zum Ende 20 wird die Wischstange 13 von den Seitenwangen 18 des Gelenkteils 12 umfaßt und dadurch fest am Gelenkteil gehalten. Dabei verläuft die Wischstange zumindest innerhalb des Gelenkteils mittig zu der Längsmittelebene 21. Die Anpreßdruckfeder 14 ist in einen Durchbruch 22 der Wischstange 13, der sich in der Längsmittelebene 21 befindet, und über einen Bügel 23 an einem in das Befestigungsteil 11 eingesetzten Stift 24 eingehängt. Die Anpreßdruckfeder 14 sucht also Gelenkteil 12 und Wischstange 13 einerseits und Befestigungsteil 11 andererseits gegeneinander zu verschwenken und erzeugt dadurch den Druck, mit dem das nicht dargestellte Wischblatt auf einer zu reinigenden Scheibe aufliegt. Die Kappe 9 deckt das Befestigungsteil 11 ab und ist gleichachsig mit dem Gelenkteil 12 schwenkbar am Befestigungsteil gelagert. Im Querschnitt hat sie ähnlich wie das Gelenkteil 12 ebenfalls eine U-Form mit einem Rücken 25 und zwei Seitenwangen 26, die um die Nabe 15 des Befestigungsteils herumlaufen und dort ineinanderübergehen.

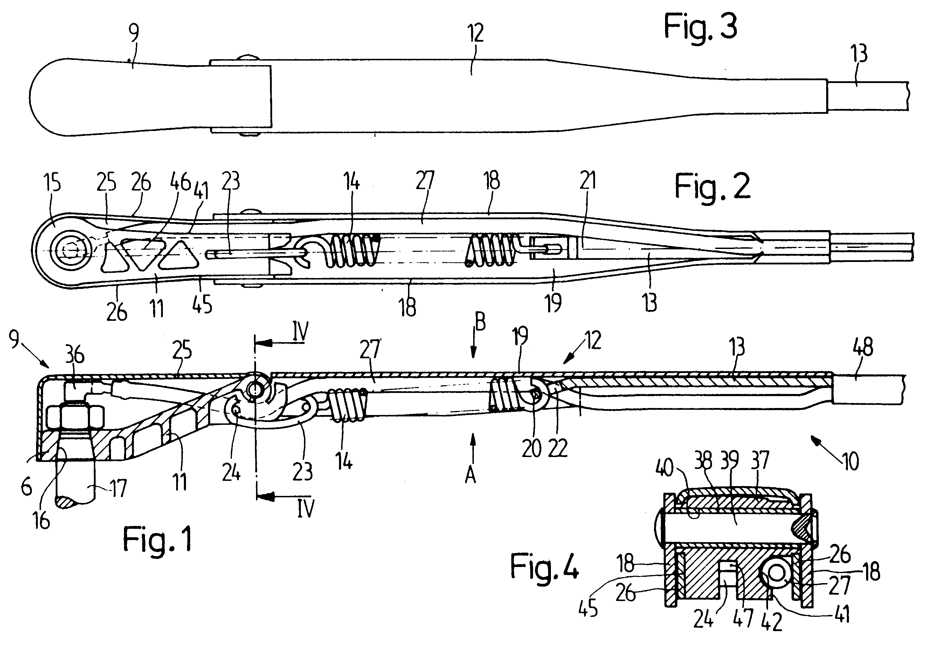

An der Wischstange 13 ist in nicht näher dargestellter Weise eine Waschdüse befestigt, die über einen biegeweichen Schlauch 27 mit Waschflüssigkeit versorgt werden kann. Der Schlauch ist vom Bereich der Nabe 15 des Befestigungsteils 11, wo er an einen Nippel 36 angeschlossen ist, bis zur Waschdüse den Wischarm 10 entlanggeführt. Der Nippel 36 ist auf einen Bund der Wischerwelle 17 aufgesetzt, die hohl ausgebildet ist und durch die die Waschflüssigkeit fließt. Wie aus Figur 2 ersichtlich ist der Nippel 36 nicht in Längsrichtung des Wischarms ausgerichtet, sondern etwas zur Seite verschwenkt, so daß der Schlauch 27 ebenfalls zur Seite hin gerichtet vom Nippel 36 ausgeht. Zunächst befindet sich der Schlauch oberhalb des Befestigungsteils 11, ist dann jedoch auf der dem Rücken 25 der Abdeckkappe 9 bzw. dem Rücken 19 des Gelenkteils abgewandten Seite um die Aufnahme 37 herumgeführt, die zur Bildung des Gelenks zwischen dem Befestigungsteil 11 und der Abdeckkappe 9 sowie dem Gelenkteil 12 einer Lagerbuchse 38 und einen Gelenkniet 39 in einer Bohrung 40 aufnimmt. Zum Halten des Schlauchs 27 ist in die entsprechende Außenwand 41 eine Hohlkehle 42 eingebracht, die von einer Seitenwange 26 der Abdeckkappe 9 abgedeckt wird. Der Abstand der Seitenwange 26 von der tiefsten Stelle der Hohlkehle 42 entspricht dem äußeren Durchmesser des Schlauches 27. Die Hohlkehle dagegen ist weniger als der halbe äußere Durchmesser des Schlauches 27 tief, der Abstand der Außenwand 41 des Befestigungsteils 11 von der betrachteten Seitenwange 26 der Abdeckkappe 9 also größer als der halbe Außendurchmesser des Schlauches 27. Dadurch ist die Hohlkehle 42 parallel zu der Seitenwange 26 bzw. zu der Außenwand 41 von unten, d. h. von der offenen Seite der Abdeckkappe 9 aus, zugänglich. Durch diesen Zugang kann der biegeweiche Schlauch 27 von unten in die Hohlkehle hineingedrückt werden, wobei die Abdeckkappe 9 die in den Figuren gezeigte Lage am Befestigungsteil 11 einnehmen kann, also nicht vom Befestigungsteil 11 weggeschwenkt zu sein braucht.

Während die Außenwand 41 einen Abstand von der entsprechenden Seitenwange 26 der Abdeckkappe 9 besitzt, steht die Lageraufnahme 37 über diese Außenwand 41 bis zur entsprechenden Seitenwange 18 des Gelenkteils 12 vor, so daß die Abdeckkappe 9 und das Gelenkteil 12 einwandfrei gelagert werden können. Auch die Abdeckkappe 9 ist symmetrisch zu der Längsmittelebene 21 ausgebildet.

Für das Befestigungsteil 11 dagegen ist diese Symmetrie nicht vorhanden. Die Außenwand 41 und die andere Außenwand 45 verlaufen zwar auch symmetrisch zu einer Mittelebene 46, die parallel zur Längsmittelebene 21 ist, die jedoch von der Außenwand 41 einen größeren Abstand als die Längsmittelebene 21 besitzt. Abgesehen von dem über die Außenwand 41 überstehenden Teil der Lageraufnahme 37 und abgesehen von der Hohlkehle 42 ist das Befestigungsteil 11 im Bereich des Gelenks zwischen dem Befestigungsteil und dem Gelenkteil sowie im Bereich des Stiftes 24 insgesamt symmetrisch zu der Ebene 46 ausgebildet. Es hat dort in dieser Ebene einen Schlitz 47, in dem der Bügel 23 in den Stift 24 eingehängt ist. Der Einhängepunkt der Anpreßdruckfeder 14 am Befestigungsteil 11 liegt also in der Ebene 46, der Einhängepunkt an der Wischstange 13 dagegen in der Ebene 21. Die Achse der Anpreßdruckfeder 14 verläuft also etwas schräg zur Längsrichtung des Wischarms 10.

Die Nabe 15 des Befestigungsteils 11 hat rundum etwa die gleiche Materialstärke. Die Achse des Durchbruchs 16 verläuft in der Längsmittelebene 21, die Nabe 15 ist also in Richtung auf die Seitenwange 26 der Abdeckkappe 9, die der Hohlkehle 42 gegenüberliegt, aus der Ebene 46 versetzt.

Innerhalb des Gelenkteils 12 ist der Schlauch 27 in einer Ecke entlanggeführt, die durch den Rücken 19 und eine Seitenwange 18 gebildet wird, wobei der Schlauch 27 durch die Anpreßdruckfeder 14 an einem Herausfallen gehindert wird. Dazu ist der Abstand zwischen der Anpreßdruckfeder 14 und der besagten Seitenwange 18 etwas kleiner als der Außendurchmesser des Schlauchs. Im Bereich der Wischstange 13 gelangt der Schlauch 27 auf deren dem Rücken 19 des Gelenkteils 12 abgewandte Unterseite und wird außerhalb des Gelenkteils 12 durch eine Kunststoffklammer 48, die auf die Wischstange 13 aufgesetzt ist, an deren Unterseite gehalten.

Bei einem Wischarm ohne Abdeckkappe kann eine Hohlkehle im Bereich des Gelenks zwischen dem Befestigungsteil 11 und dem Gelenkteil 12 durch eine Seitenwange des Gelenkteils abgedeckt werden.

## Patentansprüche

1. Wischvorrichtung für Scheiben von Kraftfahrzeugen mit einem Wischarm (10), der mit einem in einem Spritzgießverfahren hergestellten Befestigungsteil (11) auf einer pendelnd antreibbaren Wischerwelle (17) befestigbar ist, der ein im Querschnitt im wesentlichen U-förmiges Gelenkteil (12) aufweist, das mit seinen Seitenwangen (18) das Befestigungsteil (11) umgreift und das gelenkig mit dem Befestigungsteil (11) verbunden ist, und der vorzugsweise eine im Querschnitt im wesentlichen U-förmige Abdeckkappe (9) für das Befestigungsteil (11) aufweist, die das Befestigungsteil (11) mit ihren Seitenwangen (26) umgreift, und mit einer Flüssigkeitsleitung (27), die zur Versorgung einer Waschdüse mit Waschflüssigkeit innerhalb des U-förmigen Querschnitts der Abdeckkappe (9) und des Gelenkteils (12) an dem Wischarm (10) entlanggeführt ist, dadurch **gekennzeichnet**, daß das Befestigungsteil (11) seitlich eine Hohlkehle (42) besitzt, in der die Flüssigkeitsleitung (27) verläuft und die von einer Seitenwange (26) des Gelenkteils oder der Abdeckkappe (9) abdeckbar ist.

2. Wischvorrichtung nach Anspruch 1, dadurch gekennzeichnet, daß der Abstand der Seitenwange (26) von der tiefsten Stelle der Hohlkehle (42) wenigstens annähernd dem Außendurchmesser der Flüssigkeitsleitung (27) entspricht.

3. Wischvorrichtung nach Anspruch 2, dadurch gekennzeichnet, daß die Hohlkehle (42) parallel zur Seitenwange (26) zugänglich ist.

4. Wischvorrichtung nach Anspruch 3, dadurch gekennzeichnet, daß die Breite des Zugangs größer ist als der halbe Außendurchmesser der Flüssigkeitsleitung (27).

5. Wischvorrichtung nach einem der Ansprüche 1 bis 4, dadurch gekennzeichnet, daß sich zumindest im Bereich des Gelenks zwischen dem Befestigungsteil (11) und dem Gelenkteil (12) eine Hohlkehle (42) befindet.

6. Wischvorrichtung nach Anspruch 5, dadurch gekennzeichnet, daß sich die Hohlkehle (42), von der Seite des Rückens (19, 25) des Gelenkteils (12) oder der Abdeckkappe (9) aus gesehen, jenseits des Gelenks befindet.

7. Wischvorrichtung nach einem der Ansprüche 1 bis 6, dadurch gekennzeichnet, daß am Gelenkteil (12) eine Wischstange (13) befestigt ist, die mit einem Ende (20) in das Gelenkteil (12) hineinragt, daß eine Anpreßdruckfeder (14) einerseits an dem Ende (20) der Wischstange (13) oder am Gelenkteil (12) und andererseits am Befestigungsteil (11) eingehängt ist und daß sich der Einhängepunkt der Anpreßdruckfeder (14) am Befestigungsteil (11) näher an der der Hohlkehle (42) abgelegenen Seitenwange (18, 26) des Gelenkteils (12) oder der Abdeckkappe (9) befindet.

8. Wischvorrichtung nach Anspruch 7, dadurch gekennzeichnet, daß die Wischstange (13) mittig zwischen den beiden Seitenwangen (18) des Gelenkteils (12) verläuft und sich der Einhängepunkt der Anpreßdruckfeder (14) an der Wischstange (13) oder am Gelenkteil vorzugsweise mittig zwischen den beiden Seitenwangen (18) des Gelenkteils (12) befindet.

9. Wischvorrichtung nach einem der Ansprüche 1 bis 8, dadurch gekennzeichnet, daß das Befestigungsteil (11) zwei längsverlaufende Außenwände (41, 45) besitzt, die bezüglich einer ersten Mittelebene (46) im wesentlichen symmetrisch zueinander ausgebildet sind, daß das Gelenkteil (12) oder die Abdeckkappe (9) symmetrisch bezüglich einer zweiten Mittelebene (21) ausgebildet sind und daß die erste Mittelebene (46), von der Außenwand (41) des Befestigungsteils (11) mit der Hohlkehle (42) aus betrachtet, jenseits der zweiten Mittelebene (21) in einem Abstand zu dieser verläuft.

10. Wischvorrichtung nach Anspruch 9, dadurch gekennzeichnet, daß das Befestigungsteil (11) eine Nabe (15) mit einer zentralen Bohrung (16) zum Aufsetzen auf die Wischerwelle (17) besitzt und daß die Achse der Bohrung (16) im Abstand von der ersten Mittelebene (46) auf derselben Seite wie die Hohlkehle (42) angeordnet ist.

11. Wischvorrichtung nach einem vorhergehenden Anspruch, dadurch gekennzeichnet, daß das Befestigungsteil (11) eine Nabe (15) mit einer zentralen Bohrung (16) zum Aufsetzen auf die Wischerwelle (17) besitzt und daß die Achse der Bohrung (16) in einer Mittelebene (21) des Gelenkteils (12) oder der Abdeckkappe (9) verläuft.

12. Wischvorrichtung nach einem der vorhergehenden Ansprüche, dadurch gekennzeichnet, daß die Außenwand (41) des Befestigungsteils (11), in der sich die Hohlkehle (42) befindet, im wesentlichen im Abstand zur benachbarten Seitenwange (18, 26) des Gelenkteils (12) oder der Abdeckkappe (9) verläuft und daß im Bereich des Gelenks eine Lageraufnahme (37) des Befestigungsteils (11) seitlich über die Außenwand (41) vorsteht.

13. Wischvorrichtung nach einem vorhergehenden Anspruch, dadurch gekennzeichnet, daß die Waschflüssigkeitsleitung (27) im Bereich des Gelenkteils (12) zwischen einer Seitenwange (18) und dem Rücken (19) des Gelenkteils (12) und der Anpreßdruckfeder (14) entlangführt.

## Claims

1. A wiper system for windshields of motor vehicles including a wiper arm (10) which is adapted to be secured to an oscillatorily drivable wiper shaft (17) by means of an attachment piece (11) manufactured by die-casting, the wiper arm including a joint piece (12), essentially U-shaped in cross-section, embracing with its planar walls (18) the attachment piece (11) and being articulated to the attachment piece (11), and preferably including a cover (9), essentially U-shaped in cross-section, for the attachment piece (11), which cover with its planar walls (26) encompasses the attachment piece (11), and a fluid line (27) extending along the wiper am (10) within the U-shaped cross-section of the cover (9) and the joint piece (12) to supply a washing nozzle with washing fluid,
**characterized** in that the attachment piece (11) laterally has a depression (42) in which the fluid line (27) extends and which is adapted to be covered by a planar wall (26) of the joint piece or by the cover (9).

2. A wiper system as claimed in claim 1,
**characterized** in that the distance from the planar wall (26) to the deepest point of the depression (42) corresponds at least approximately to an outside diameter of the fluid line (27).

3. A wiper system as claimed in claim 2,
**characterized** in that the depression (42) extends parallel to the planar wall (26).

4. A wiper system as claimed in claim 3,
**characterized** in that the width of the access is larger than half of the outside diameter of the fluid line (27).

5. A wiper system as claimed in any one of claims 1 to 4,
**characterized** in that a depression (42) is arranged at least in the area of the joint between the attachment piece (11) and the joint piece (12).

6. A wiper system as claimed in claim 5,
**characterized** in that the depression (42) is located beyond the joint, when viewed from the side of the back (19, 25) of the joint piece (12) or the cover (9).

7. A wiper system as claimed in any one of claims 1 to 6,
**characterized** in that a wiper rod (13) is secured to the joint piece (12) and extends with one end (20) into the joint piece (12), in that a pressure spring (14) is secured to the end (20) of the Wiper rod (13) or to the joint piece (12), on the one hand, and to the attachment piece (11), on the other hand, and in that the point where the pressure spring (14) is secured to the attachment piece (11) is positioned more closely to the planar wall (18, 26) of the joint piece (12) or the cover (9), the planar wall (18, 26) being remote from the depression (42).

8. A wiper system as claimed in claim 7,
**characterized** in that the wiper rod (13) extends centrically between the two planar walls (18) of the joint piece (12), and in that the point where the pressure spring (14) is secured to the wiper rod (13) or to the joint piece is preferably positioned centrically between the two planar walls (18) of the joint piece (12).

9. A wiper system as claimed in any one of claims 1 to 8,
**characterized** in that the attachment piece (11) includes two outside walls (41, 45) extending in the longitudinal direction, which are essentially symmetrical with regard to a first centre plane (46), in that the joint piece (12) or the cover (9) is formed symmetrically with regard to a second centre plane (21), and in that the first centre plane (46), when viewed from the outside wall (41) of the attachment piece (11) with the depression (42), extends beyond the second centre plane (21) at a distance from it.

10. A wiper system as claimed in claim 9,
**characterized** in that the attachment piece (11) has a hub (15) with a central bore (16) for mounting it on the wiper shaft (17), and in that the axis of the bore (16) is arranged at a distance from the first centre plane (46) on the same side as the depression (42).

11. A wiper system as claimed in a preceding claim,
**characterized** in that the attachment piece (11) has a hub (15) with a central bore (16) for mounting it on the wiper shaft (17), and in that the axis of the bore (16) extends in a centre plane (21) of the joint piece (12) or of the cover (9).

12. A wiper system as claimed in any one of the preceding claims,
**characterized** in that the outside wall (41) of the attachment piece (11), in which the depression (42) extends, is essentially spaced from the adjacent planar wall (18, 26) of the joint piece (12) or of the cover (9), and in that in the area of the joint a bearing recess (37) of the attachment piece (11) protrudes laterally from the outside wall (41).

13. A wiper system as claimed in a preceding claim,
**characterized** in that the washing fluid line (27) in the area of the joint piece (12) extends between a planar wall (18) and the back (19) of the joint piece (12) and the pressure spring (14).

## Revendications

1. Système d'essuie-glace pour véhicules automobiles, comportant un bras d'essuie-glace (10) qui peut être fixé, par une partie de fixation (11) réalisée par moulage sous pression, sur un arbre d'essuie-glace (17) pouvant être entraîné en va-et-vient, ledit bras présentant une partie articulée (12) de forme de section essentiellement en U, qui entoure la partie de fixation (11) par ses joues latérales (18) et est reliée de façon articulée à la partie de fixation (11), et ledit bras présentant de préférence un cache de recouvrement (9) de forme de section essentiellement en U pour la partie de fixation (11), cache qui recouvre la partie de fixation (11) par ses joues latérales (26), et comprenant une conduite de liquide (27) qui, afin d'alimenter une buse d'arrosage en liquide de lavage, est guidée le long du bras d'essuie-glace (10) à l'intérieur de la section en forme de U du cache de recouvrement (9) et de la partie articulée (12), **caractérisé** en ce que la partie de fixation (11) possède latéralement une goulotte (42), dans laquelle s'étend la conduite de liquide (27) et qui peut être recouverte par une joue latérale (18, 26) de la partie articulée ou du cache de recouvrement (9).

2. Système d'essuie-glace selon la revendication 1, **caractérisé** en ce que la distance entre la joue latérale (26) et le point le plus profond de la goulotte (42) correspond au moins approximativement au diamètre extérieur de la conduite de liquide (27).

3. Système d'essuie-glace selon la revendication 2, **caractérisé** en ce que la goulotte (42) est accessible parallèlement à la joue latérale (26).

4. Système d'essuie-glace selon la revendication 3, **caractérisé** en ce que la largeur de l'accès est supérieure à la moitié du diamètre extérieur de la conduite de liquide (27).

5. Système d'essuie-glace selon l'une quelconque des revendications 1 à 4, **caractérisé** en ce qu'on trouve une goulotte (42) au moins dans la région de l'articulation entre la partie de fixation (11) et la partie articulée (12).

6. Système d'essuie-glace selon la revendication 5, **caractérisé** en ce que la goulotte (42) se trouve, vue depuis le côté du dos (19, 25) de la partie articulée (12) ou du cache de recouvrement (9), de l'autre côté de l'articulation.

7. Système d'essuie-glace selon l'une quelconque des revendications 1 à 6, **caractérisé** en ce qu'une tige d'essuie-glace (13) est fixée à la partie articulée (12) et pénètre par une extrémité (20) dans la partie articulée (12), en ce qu'un ressort de pression d'application (14) est accroché d'une part à l'extrémité (20) de la tige d'essuie-glace (13) ou à la partie articulée (12) et d'autre part à la partie de fixation (11), et en ce que le point d'accrochage du ressort de pression d'application (14) sur la partie de fixation (11) se trouve plus près de la joue latérale (18, 26) de la partie articulée (12) ou du cache de recouvrement (9) qui est opposée à la goulotte (42).

8. Système d'essuie-glace selon la revendication 7, **caractérisé** en ce que la tige d'essuie-glace (13) s'étend au milieu entre les deux joues latérales (18) de la partie articulée (12), et le point d'accrochage du ressort de pression d'application (14) sur la tige d'essuie-glace (13) ou sur la partie articulée se trouve de préférence au milieu entre les deux joues latérales (18) de la partie articulée (12).

9. Système d'essuie-glace selon l'une quelconque des revendications 1 à 8, **caractérisé** en ce que la partie de fixation (11) possède deux parois extérieures (41, 45) s'étendant longitudinalement, qui sont réalisées essentiellement symétriques entre elles par rapport à un premier plan médian (46), et en ce que la partie articulée (12) ou le cache de recouvrement (9) sont configurés symétriquement par rapport à un deuxième plan médian (21), et en ce que le premier plan médian (46), vu depuis la paroi extérieure (41) de la partie de fixation (11) pourvue de la goulotte (42), s'étend au-delà du deuxième plan médian (21) à distance de ce dernier.

10. Système d'essuie-glace selon la revendication 9, **caractérisé** en ce que la partie de fixation (11) possède un moyeu (15) avec un perçage central (16) pour la pose sur l'arbre d'essuie-glace (17), et en ce que l'axe du perçage (16) est disposé à distance du premier plan médian (46) sur le même côté que la goulotte (42).

11. Système d'essuie-glace selon l'une quelconque des revendications précédentes, **caractérisé** en ce que la partie de fixation (11) possède un moyeu (15) avec un perçage central (16) pour la pose sur l'arbre d'essuie-glace (17), et en ce que l'axe du perçage (16) s'étend dans un plan médian (21) de la partie articulée (12) ou du cache de recouvrement (9).

12. Système d'essuie-glace selon l'une quelconque des revendications précédentes, **caractérisé** en ce que la paroi extérieure (41) de la partie de fixation (11), dans laquelle se trouve la goulotte (42), s'étend essentiellement à distance de la joue latérale voisine (18, 26) de la partie articulée (12) ou du cache de recouvrement (9), et en ce qu'un logement de palier (37) de la partie de fixation (11) dépasse latéralement de la paroi extérieure (41) dans la région de l'articulation.

13. Système d'essuie-glace selon l'une quelconque des revendications précédentes, **caractérisé** en ce que la conduite de liquide de lavage (27) passe, dans la région de la partie articulée (12), entre une joue latérale (18) et le dos (19) de la partie articulée (12) d'une part, et le ressort de pression d'application (14) d'autre part.
